# EUROPÄISCHE PATENTSCHRIFT

(11) **EP 2 332 776 B1**
(45) Veröffentlichungstag und Bekanntmachung des Hinweises auf die Patenterteilung: **03.06.2015**
(21) Anmeldenummer: 10191644.3
(22) Anmeldetag: 18.11.2010
(51) Int. Cl.: B60Q 1/38, B60Q 1/48

(54) **Verfahren zum Anzeigen eines Ausparkvorgangs**
Method for displaying a procedure for pulling out of a parking space
Procédé d'affichage d'un processus de sortie d'une place de stationnement

(30) Priorität: 30.11.2009 DE 102009047262
(43) Veröffentlichungstag der Anmeldung: 15.06.2011
(73) Patentinhaber: Robert Bosch GmbH, 70442 Stuttgart (DE)
(72) Erfinder: Pampus, Christian, 71229, Leonberg (DE); Raisch, Florian, 71116, Gaertringen (DE); Irion, Albrecht, 70563, Stuttgart (DE); Schneider, Marcus, 71642, Ludwigsburg (DE)

(56) Entgegenhaltungen:
- EP-A1- 1 935 739
- EP-A1- 2 000 356
- EP-A2- 2 048 516
- WO-A1-2005/058641
- DE-A1- 10 045 616
- DE-A1- 10 306 108
- DE-A1- 10 355 807
- DE-A1-102007 029 773
- US-A- 2 029 130

## Beschreibung

### Stand der Technik

Die Erfindung betrifft ein Verfahren zum Anzeigen eines Ausparkvorgangs eines Fahrzeugs aus einer Parklücke mit einem Fahrtrichtungsanzeiger.

Um einen Fahrer eines Fahrzeugs beim Einparken bzw. beim Ausparken zu unterstützen, werden derzeit vielfach Parkassistenzsysteme eingesetzt. Diese umfassen im Allgemeinen Abstandssensoren, mit denen der Abstand zu Objekten in der Umgebung des Fahrzeugs bestimmt wird, um den Fahrer des Fahrzeugs vor einer möglichen Kollision zu warnen. Eine Information über den Abstand zu einem Objekt wird an den Fahrer ausgegeben. Dies erfolgt zum Beispiel durch optische und/oder akustische Anzeigen. So ist es zum Beispiel üblich, Sequenzen von Warntönen auszugeben, wobei die Wiederholrate der Warntöne mit abnehmender Distanz zu einem Objekt steigt. Bei direkter Kollisionsgefahr, d.h. bei Unterschreiten eines bestimmten Abstandes wird ein Dauerton ausgegeben. Zusätzlich ist es vielfach üblich, den Abstand zu Objekten optisch anzuzeigen. Dies erfolgt zum Beispiel durch LEDs, wobei die Anzahl der aufleuchtenden LEDs mit abnehmendem Abstand zu einem Objekt zunimmt. Zusätzlich kann sich bei Unterschreiten eines vorgegebenen Abstands auch die Farbe der LEDs ändern. Alternativ sind auch Systeme bekannt, bei denen auf einer geeigneten Anzeigevorrichtung eine zweidimensionale Darstellung in Draufsicht des Fahrzeugs gezeigt wird, und Objekte in der Fahrzeugumgebung angedeutet werden. Als Anzeigevorrichtung dient dabei zum Beispiel ein Bildschirm eines Bordcomputers oder auch ein Bildschirm eines Navigationssystems des Fahrzeugs.

Neben Parkassistenzsystemen, die dem Fahrer nur Hinweise zum Abstand zu Objekten in der Umgebung des Fahrzeugs geben, sind auch Parkassistenzsysteme bekannt, die Hinweise zu einer Lenkführung geben bzw. das Fahrzeug automatisch einparken bzw. ausparken. In diesem Fall wird die Lenkung des Fahrzeugs vom eingesetzten Parkassistenzsystem übernommen. Der Fahrer muss im Allgemeinen nur noch das Vorwärts- und Rückwärtsbewegen des Fahrzeugs übernehmen. Neben der Übernahme der Lenkung durch das Parkassistenzsystem sind auch Systeme erhältlich, die dem Fahrer Hinweise über notwendige Lenkpositionen geben, um das Fahrzeug aus der Parklücke auszuparken oder in eine Parklücke einzuparken. Um dem Fahrer eine entsprechende Unterstützung bieten zu können, wird vor dem Einparken die Parklücke vermessen und eine geeignete Einparktrajektorie in die Parklücke berechnet. Beim Ausparken werden entsprechend die entweder zuvor gespeicherten Daten der Parklücke übernommen oder aber es wird im Stand eine neue Vermessung der Parklücke durchgeführt und darauf eine Ausparktrajektorie berechnet. Die Ausparktrajektorie bzw. die Einparktrajektorie wird dabei so bestimmt, dass das Ein- bzw. Ausparken des Fahrzeugs mit möglichst wenig Rangierzügen erfolgen kann.

Um keine Gefahr für den fließen Verkehr zu werden und gleichzeitig anzuzeigen, dass ein Ausparken aus einer Parklücke gewünscht ist, sollte zu Beginn des Ausparkvorgangs ein Fahrtrichtungsanzeiger das gewünschte Ausparken in Richtung der Ausparkseite anzeigen. Durch das automatische Lösen des Fahrtrichtungsanzeigers bei einer Rückstellung des Lenkrads in Neutralstellung wird jedoch vielfach während des Rangierens automatisch der Fahrtrichtungsanzeiger gelöst und die Anzeige für den fließenden Verkehr stoppt. Wenn der Fahrer übersieht, dass sich der Fahrtrichtungsanzeiger gelöst hat, kann dies zu einem Unfall führen, insbesondere da der Fahrer des Fahrzeugs davon ausgehen wird, dass andere Verkehrsteilnehmer seine Absicht erkennen und der Fahrer ohne weitere Anzeige in den Straßenverkehr einfädelt. Die Gefahr eines sich dadurch ergebenden Unfalls ist insbesondere in schwer überschaubaren Situationen, zum Beispiel nachts, bei Regen oder in einer Kurve, besonders hoch.

Weiterhin besteht auch die Gefahr, insbesondere bei Einsatz eines automatischen Parkassistenzsystems, das den Ausparkvorgang übernimmt, dass der Fahrer vergisst, den Fahrtrichtungsanzeiger zu setzen.

Aus der DE 10 2007 029 773 A1 ist ein Verfahren zum Unterstützen eines Ausparkvorganges bekannt, bei dem das Ausparken mit Hilfe eines Parklenkassistenzsystems durchgeführt wird. Die Richtung, in der ausgeparkt werden soll, kann zum Beispiel durch Betätigung eines Blinkerbedienelementes erfasst werden. Des Weiteren ist beschrieben, dass die Blinkerfunktion während des gesamten Ausparkvorganges aktiviert bleibt.

Die WO 2005/058641 A1 offenbart Mittel zur automatischen Anzeige einer Änderung der Fahrtrichtung bevor das Fahrzeug losfahrt. Hierzu wird der Blinker aktiviert, sobald der Motor gestartet wurde und das Lenkrad bewegt wird sowie ein Gang eingelegt ist. Sobald das Fahrzeug eine Geschwindigkeit von 30 km/h übersteigt oder das Bremspedal betätigt wird, wird die Fahrtrichtungsanzeige beendet.

Aus der DE 103 06 108 A1 ist ein Kraftfahrzeug bekannt, bei dem bei Erkennen einer Kurvenfahrt bei einem Lenkwinkel größer als einem vorgegebenen Winkel oder einem erkannten Blinksignal das Einschalten eines Kurvenscheinwerfers veranlasst wird. Im Falle einer Ausparksituation wird ebenfalls bei einem vorgegebenen Lenkwinkel der jeweilige Kurvenscheinwerfer eingeschaltet. Um eine Ausparksituation zu erkennen, können zum Beispiel Sensoren eingesetzt werden, die Hindernisse vor dem Kraftfahrzeug detektieren können.

Die US 2 029 130 A offenbart auch ein Verfahren zum Anzeigen eines Ausparkvorgangs.

### Offenbarung der Erfindung

### Vorteile der Erfindung

Ein erfindungsgemäßes Verfahren zum Anzeigen eines Ausparkvorgangs eines Fahrzeugs aus einer Parklücke mit einem Fahrtrichtungsanzeiger umfasst folgende Schritte:
a) Erfassen, ob ein durchgeführtes Fahrmanöver ein Ausparkmanöver aus einer Parklücke ist,
b) Anzeigen des Ausparkmanövers durch Aktivieren des Fahrtrichtungsanzeigers,
c) Aktiviert Halten des Fahrtrichtungsanzeigers bis das Ausparkmanöver beendet ist.

Erfindungsgemäß wird ein Fahrmanöver als Ausparkmanöver erfasst, wenn auf einen ersten Zug in einer ersten Richtung ein zweiter Zug in einer zweiten, der ersten Richtung entgegengesetzten Richtung folgt und bei mindestens einem Zug eine Lenkbewegung durchgeführt wird.

Durch das aktiviert Halten des im Allgemeinen als Blinker bezeichneten Fahrtrichtungsanzeigers bis das Ausparkmanöver beendet ist, wird dem fließenden Verkehr kontinuierlich die Absicht des Fahrers des Fahrzeugs angezeigt. Der fließende Verkehr kann sich somit auf den Ausparkvorgang einrichten und ggf. rechtzeitig abbremsen, so dass Kollisionen vermieden werden.

Um den Fahrtrichtungsanzeiger aktiviert halten zu können solange das Ausparkmanöver andauert, ist es notwendig, den Schalter des Fahrtrichtungsanzeigers von der üblicherweise eingesetzten Betätigungsvorrichtung zu entkoppeln. Auf diese Weise ist es möglich, dass im normalen Verkehr der Fahrtrichtungsanzeiger mit dem Betätigungselement betätigt wird und bei Rückstellung des Lenkrades wieder deaktiviert wird, wohingegen, wenn ein Ausparkmanöver erfasst wird, kein Abschalten des Fahrtrichtungsanzeigers erfolgt. Hierzu ist es entweder möglich, dass bei einem erfassten Ausparkmanöver das Betätigungselement für den Fahrtrichtungsanzeiger nicht in seine Ausgangsposition gebracht wird oder alternativ das Betätigungselement in seine Ausgangsposition gebracht wird, aber in diesem Fall der Schalter für den Fahrtrichtungsanzeiger nicht betätigt wird.

Das Betätigungselement für den Fahrtrichtungsanzeiger ist üblicherweise ein Hebel, der in der Nähe des Lenkrads positioniert ist, so dass dieser betätigt werden kann, ohne dass der Fahrer das Lenkrad loslassen muss. Es sind jedoch auch andere Schalter oder Betätigungseinrichtungen denkbar, mit denen sich der Fahrtrichtungsanzeiger betätigen lässt. Diese sollten jedoch auch dann so angeordnet sein, dass der Fahrer nicht gezwungen ist, zum Betätigen des Fahrtrichtungsanzeigers das Lenkrad loszulassen.

Damit der Fahrtrichtungsanzeiger nicht deaktiviert wird, wenn das Lenkrad wieder in seine Neutralstellung zurückgeführt wird, ist es vorteilhaft, den Fahrtrichtungsanzeiger mit einem Steuergerät anzusteuern. Das Steuergerät kann zum Beispiel mit dem Fahrassistenzsystem verbunden sein, so dass Befehle vom Fahrassistenzsystem über das Steuergerät an den Fahrtrichtungsanzeiger übermittelt werden können.

Wenn das Fahrzeug ein Fahrassistenzsystem umfasst, das auch ein automatisches Ausparken aus einer Parklücke ermöglicht, ist es weiterhin vorteilhaft, wenn der Fahrtrichtungsanzeiger automatisch betätigt wird, wenn das Fahrassistenzsystem für ein automatisches Ausparkmanöver aktiviert wird. Die Aktivierung des Fahrassistenzsystems kann zum Beispiel über die Betätigung eines geeigneten Bedienelements, beispielsweise einen Schalter oder einen berührungsempfindlichen Bildschirm erfolgen.

Alternativ ist es auch möglich, dass das Fahrassistenzsystem durch Betätigung des Fahrtrichtungsanzeigers für einen Ausparkvorgang aktiviert wird. In diesem Fall wird erfindungsgemäß bei einer Rückstellung des Lenkrads in Neutralposition der Fahrtrichtungsanzeiger nicht automatisch deaktiviert, sondern bleibt aktiviert, bis das Ausparkmanöver beendet ist.

Das Deaktivieren des Fahrtrichtungsanzeigers kann nach Beendigung des Ausparkmanövers automatisch oder manuell erfolgen. Wenn das Deaktivieren des Fahrtrichtungsanzeigers manuell erfolgt, betätigt der Fahrer ein entsprechendes Betätigungselement, um den Fahrtrichtungsanzeiger zu deaktivieren. Bei einem automatischen Deaktivieren des Fahrtrichtungsanzeigers wird vom eingesetzten Fahrassistenzsystem erfasst, ob der Ausparkvorgang beendet ist und wenn ein Ende des Ausparkvorgangs erkannt wird, wird der Fahrtrichtungsanzeiger deaktiviert. Das Ende des Ausparkvorgangs kann zum Beispiel durch Beschleunigen des Fahrzeugs auf eine Geschwindigkeit, die eine vorgegebene Geschwindigkeit übersteigt, erfolgen. Alternativ ist es zum Beispiel auch möglich, das Ende des Ausparkmanövers zu detektieren, wenn das Fahrzeug eine Strecke in derselben Richtung zurücklegt, die eine vorgegebene Streckenlänge, beispielsweise eine Fahrzeuglänge überschreitet. Die Fahrtrichtung der entsprechenden Strecke ist dabei üblicherweise vorwärts.

Damit der Fahrtrichtungsanzeiger nur bei einem Ausparkmanöver aktiviert bleibt und nicht bei einem normalen Fahrmanöver, zum Beispiel bei einem Abbiegeprozess, ist es notwendig, dass das Fahrmanöver, das durchgeführt wird, als Ausparkmanöver erkannt wird. Hierzu wird das Verfahren gemäß Anspruch 1 verwendet. Zusätzlich kann das Fahrmanöver als Ausparkmanöver erfasst, wenn eine Ausparkautomatik aktiviert wird. Da eine Ausparkautomatik üblicherweise nur dann aktiviert wird, wenn ein Ausparkvorgang gewünscht ist, kann in jedem Fall davon ausgegangen werden, dass nach der Aktivierung der Ausparkautomatik auch ein Ausparkvorgang erfolgt. Das Aktivieren der Ausparkautomatik, die üblicherweise Teil eines Fahrassistenzsystems ist, kann zum Beispiel, wie vorstehend bereits beschrieben, durch Betätigen eines geeigneten Betätigungselements erfolgen. Als Betätigungselemente eignen sich hierzu zum Beispiel geeignete Schalter, Taster oder auch ein berührungsempfindlicher Bildschirm. Alternativ ist es auch möglich, eine Ausparkautomatik zum Beispiel zu aktivieren, indem im Stillstand des Fahrzeugs ein Blinker aktiviert wird. Um Sicherzustellen, dass es sich in diesem Fall um einen Ausparkvorgang handelt, ist es zum Beispiel möglich, die Ausparkautomatik durch Setzen des Blinkers nur dann zu aktivieren, wenn zusätzliche Voraussetzungen erfüllt sind.

Als zusätzliche Vorraussetzung kann zum Beispiel der Abstand zu Objekten in der Umgebung des Fahrzeugs erfasst werden. Wenn sich die Objekte bei einer Bewegung des Fahrzeugs nicht bewegen, kann davon ausgegangen werden, dass ein Ausparkmanöver gewünscht ist. Insbesondere wenn ein Abbiegevorgang gewünscht ist und ein weiteres Fahrzeug vor dem Fahrzeug steht, wird sich zunächst dieses Fahrzeug bewegen, bevor der Fahrer das eigene Fahrzeug in Bewegung setzt. Dadurch, dass das vorausfahrende Fahrzeug sich bereits bewegt, bevor das eigene Fahrzeug fährt, wird zunächst erfasst, dass es sich nicht um ein stehendes sondern um ein bewegtes Objekt handelt. In diesem Fall kann im Allgemeinen davon ausgegangen werden, dass das Fahrzeug nicht parkt.

In einer alternativen Ausführungsform wird das durchgeführte Fahrmanöver zusätzlich als Ausparkmanöver erfasst, wenn vor und/oder hinter dem Fahrzeug Objekte von den Abstandssensoren erfasst werden. Zur Absicherung, dass es sich wirklich um ein Ausparkmanöver handelt, ist auch hier vorteilhaft, zusätzlich zu erfassen, ob die von den Abstandssensoren erfassten Objekte als stehende Objekte erkannt werden. Wenn es sich um stehende Objekte handelt, wird üblicherweise ein Ausparkmanöver durchgeführt. Wenn die von den Abstandssensoren erfassten Objekte keine stehenden Objekte sind, kann im Allgemeinen davon ausgegangen werden, dass das geplante Fahrmanöver kein Ausparkmanöver ist.

Selbst für den Fall, dass ein geplantes Fahrmanöver zusätzlich als Ausparkmanöver erfasst wird, da der Blinker betätigt wird und sich vor und hinter dem Fahrzeug Objekte befinden, stellt dies im Allgemeinen kein Problem dar, da mit dem nachfolgenden Fahrmanöver, zum Beispiel einem Abbiegevorgang ein Manöver durchgeführt wird, das auch in dem Fall, dass das Fahrmanöver ein Ausparkmanöver gewesen wäre, zu einem Deaktivieren des Fahrtrichtungsanzeigers führt. Nur für den Fall, dass das Deaktivieren des Fahrtrichtungsanzeigers durch den Fahrer erfolgt, ist in diesem Fall das Deaktivieren durch den Fahrer bei einem irrtümlich als Ausparkmanöver erkannten Fahrmanöver notwendig.

Um Objekte in der Umgebung des Fahrzeugs zu erfassen, können beliebige, dem Fachmann bekannte Systeme eingesetzt werden, die die Erfassung von Objekten ermöglichen. Diese Systeme umfassen üblicherweise Abstandssensoren und zumindest eine Auswerteeinheit. Als Abstandssensoren werden zum Beispiel Ultraschallsensoren, Infrarotsensoren, Radarsensoren, kapazitive Sensoren oder LIDAR-Sensoren verwendet. Die Abstandssensoren senden im Allgemeinen ein Signal, das von einem Objekt in der Umgebung des Fahrzeugs reflektiert wird. Das reflektierte Echo des Signals wird von dem Sensor wieder empfangen. Aus der Laufzeit des Signals vom Senden bis zum Empfang des Echos kann dann die Entfernung des Sensors zu dem Objekt bestimmt werden. Bei Einsatz von mehreren Sensoren kann weiterhin durch ein Dreh- und Angulationsverfahren oder Trilaterationsverfahren die Richtung des Objekts bestimmt werden. Die Auswertung der Signale der Abstandssensoren erfolgt dann in der Auswerteeinheit. Als Auswerteeinheit kann neben einem separaten Steuergerät, das mit den Abstandssensoren verbunden ist, alternativ auch ein Prozessor in mindestens einem der Abstandssensoren dienen.

Bei derzeit eingesetzten Fahrassistenzsystemen befinden sich die Abstandssensoren üblicherweise im Frontbereich und im Heckbereich des Fahrzeugs. Bei Fahrassistenzsystemen, die ein automatisches Einparken bzw. Ausparken in bzw. aus Parklücken ermöglichen, ist zusätzlich mindestens ein Sensor so positioniert, dass die Umgebung seitlich neben dem Fahrzeug erfasst werden kann.

Wenn ein Fahrmanöver als Ausparkmanöver erfasst wird, indem zusätzlich vor und/oder hinter dem Fahrzeug Objekte von Abstandssensoren erfasst werden, ist es insbesondere vorteilhaft, wenn zusätzliche Voraussetzungen erfüllt werden. Hierzu ist es zum Beispiel möglich, dass neben dem Erfassen von Objekten vor und/oder hinter dem Fahrzeug zusätzlich ein Lenkvorgang detektiert wird, der zu einem Umfahren mindestens eines der erfassten Objekte führt. Sollte ein Abbiegen des Fahrzeugs gewünscht werden, wird üblicherweise kein Objekt umfahren. Ein Umfahren eines Objekts ist im Allgemeinen nur dann erforderlich, wenn das Fahrzeug aus einer Parklücke ausparkt.

Erfindungsgemäß wird ein Fahrmanöver als Ausparkmanöver erfasst, wenn auf einen ersten Zug in einer ersten Richtung ein zweiter Zug in einer zweiten, der ersten Richtung entgegengesetzten Richtung folgt und bei mindestens einem Zug eine Lenkbewegung durchgeführt wird. Wenn auf einen ersten Zug in einer ersten Richtung, ein zweiter Zug in einer zweiten Richtung, der ersten Richtung entgegengesetzten Richtung folgt, wird es sich hierbei im Allgemeinen um ein Rangiermanöver handeln. Das Durchführen solcher Rangiermanöver ist üblicherweise dann gegeben, wenn ein Ausparken aus einer engen Parklücke erfolgen soll. Um in Vorwärtsfahrt in den fließenden Verkehr einmünden zu können, wird hierzu zunächst ein Rückwärtszug durchgeführt. In diesem Fall ist somit der erste Zug in die erste Richtung ein Rückwärtszug und der zweite Zug in die zweite Richtung ein Vorwärtszug. Durch den Rückwärtszug wird der Abstand zu einem Objekt vor dem Fahrzeug vergrößert, so dass mehr Raum zur Verfügung steht, um das Fahrzeug aus der Parklücke manövrieren zu können und vorwärts in den fließenden Verkehr einfahren zu können.

Neben dem Erfassen eines Fahrmanövers als Ausparkmanöver aufgrund des durchgeführten Fahrmanövers, indem zunächst ein erster Zug in einer ersten Richtung von einem zweiten Zug in einer zweiten, der ersten Richtung entgegengesetzten Richtung gefolgt ist, ist es auch aus dem Stand der Technik bekannt, dass ein Fahrmanöver als Ausparkmanöver erfasst wird, wenn sowohl eine Ausparkautomatik aktiviert wird, als auch zusätzlich vor und/oder hinter dem Fahrzeug Objekte erfasst werden müssen, um ein Fahrmanöver als Ausparkmanöver zu erkennen. Weiterhin ist es zum Beispiel auch möglich, dass ein Fahrmanöver nur dann als Ausparkmanöver erfasst wird, wenn vor und/oder hinter dem Fahrzeug Objekte erfasst werden und zusätzlich ein erster Zug in einer ersten Richtung durchgeführt wird, auf den ein zweiter Zug in einer zweiten, der ersten Richtung entgegengesetzten Richtung folgt. Auch ist es möglich, dass ein Fahrmanöver nur dann als Ausparkmanöver erfasst wird, wenn alle drei vorstehend beschriebenen Voraussetzungen erfüllt sind.

In einer weiteren Ausführungsform der Erfindung wird ein Fahrmanöver zusätzlich als Ausparkmanöver erfasst, wenn zusätzlich der Fahrtrichtungsanzeiger vom Fahrer aktiviert wird. So ist zum Beispiel möglich, dass sowohl die Ausparkautomatik aktiviert wird als auch der Fahrtrichtungsanzeiger aktiviert wird, um das Fahrmanöver als Ausparkmanöver zu erfassen.

Wenn erfindungsgemäß das Fahrmanöver als Ausparkmanöver erfasst wird, wenn auf einen ersten Zug in zweiter Zug in einer zweiten, der ersten Richtung entgegengesetzten Richtung folgt, und bei mindestens einem Zug eine Lenkbewegung durchgeführt wird, ist es zum Beispiel vorteilhaft, wenn zusätzlich der Fahrtrichtungsanzeiger vom Fahrer aktiviert wird. Das Aktivieren des Fahrtrichtungsanzeigers vom Fahrer erfolgt dabei vorzugsweise spätestens zu Beginn des Vorwärtszuges.

Um zu verhindern, dass ein als Ausparkmanöver erfasstes Fahrmanöver durchgeführt wird, ohne dass der Fahrtrichtungsanzeiger aktiviert wird, ist es weiterhin vorteilhaft, wenn das Aktivieren des Fahrtrichtungsanzeigers automatisch erfolgt, sobald das Fahrmanöver als Ausparkmanöver erfasst wurde. Auf diese Weise wird sichergestellt, dass der fließende Verkehr bzw. Personen in der Umgebung des Fahrzeugs rechtzeitig über die Absicht des Fahrers des Fahrzeugs informiert werden, indem der gewünschte Ausparkvorgang durch Aktivieren des Fahrtrichtungsanzeigers angezeigt wird.

Das Anzeigen der Absicht, aus einer Parklücke auszuparken, ist insbesondere dann notwendig, wenn das Fahrzeug in einer Parallelparklücke parkt. Somit findet das erfindungsgemäße Verfahren insbesondere dann Verwendung, wenn ein Fahrmanöver als Ausparkmanöver aus einer Parallelparklücke erfasst wird.

Auf welcher Seite der Fahrtrichtungsanzeiger zu betätigen ist, ergibt sich bei einer automatischen Aktivierung des Fahrtrichtungsanzeigers zum Beispiel durch den ersten getätigten Lenkeinschlag. Wenn zum Beispiel ein Ausparkmanöver nach links erfolgen soll und der erste gefahrene Zug ein Rückwärtszug ist, wird der Fahrer des Fahrzeugs, sofern kein Hindernis dies verhindert, während des Rückwärtsfahrzuges das Lenkrad nach rechts einschlagen. Entsprechend wird bei dem dem Rückwärtszug folgenden Vorwärtszug das Lenkrad nach links eingeschlagen. Wenn der erste Zug ein Vorwärtszug ist, so erfolgt sofort das Einschlagen des Lenkrades nach links. Entsprechend wird bei einem Ausparken aus der Parallelparklücke nach rechts das Lenkrad in die jeweils entgegengesetzte Richtung bewegt.

Wenn das Ausparkmanöver von einer Ausparkautomatik unterstützt wird, so wird bereits bei der Aktivierung der Ausparkautomatik üblicherweise die Richtung, in die ausgeparkt werden soll, vorgegeben. Auf diese Weise wird der Fahrtrichtungsanzeiger üblicherweise in die richtige Richtung betätigt.

## Patentansprüche

1. Verfahren zum Anzeigen eines Ausparkvorgangs eines Fahrzeugs aus einer Parklücke mit einem Fahrtrichtungsanzeiger, folgende Schritte umfassend:
(a) Erfassen, ob ein durchgeführtes Fahrmanöver ein Ausparkmanöver aus einer Parklücke ist, wobei ein Fahrmanöver als Ausparkmanöver erfasst wird, wenn auf einen ersten Zug in einer ersten Richtung ein zweiter Zug in einer zweiten, der ersten Richtung entgegengesetzten Richtung folgt und bei mindestens einem Zug eine Lenkbewegung durchgeführt wird.
(b) Anzeigen des Ausparkmanövers durch Aktivieren des Fahrtrichtungsanzeigers,
(c) Aktiviert halten des Fahrtrichtungsanzeigers bis das Ausparkmanöver beendet ist.

2. Verfahren gemäß Anspruch 1, **dadurch gekennzeichnet, dass** ein Fahrmanöver zusätzlich als Ausparkmanöver erfasst wird, wenn eine Ausparkautomatik aktiviert wird.

3. Verfahren gemäß Anspruch 1 oder 2, **dadurch gekennzeichnet, dass** ein Fahrmanöver zusätzlich als Ausparkmanöver erfasst wird, wenn vor und/oder hinter dem Fahrzeug Objekte von Abstandssensoren erfasst werden.

4. Verfahren gemäß Anspruch 3, **dadurch gekennzeichnet, dass** die von den Abstandssensoren erfassten Objekte als stehende Objekte erkannt werden.

5. Verfahren gemäß Anspruch 3 oder 4, **dadurch gekennzeichnet, dass** das Fahrmanöver als Ausparkmanöver erfasst wird, wenn zusätzlich ein Lenkvorgang detektiert wird, der zu einem Umfahren mindestens eines der erfassten Objekte führt.

6. Verfahren gemäß einem der Ansprüche 1 bis 5, **dadurch gekennzeichnet, dass** der erste Zug in die erste Richtung ein Rückwärtszug und der zweite Zug in die zweite Richtung ein Vorwärtszug ist.

7. Verfahren gemäß einem der Ansprüche 2 bis 6, **dadurch gekennzeichnet, dass** das Fahrmanöver als Ausparkmanöver erfasst wird, wenn zusätzlich der Fahrtrichtungsanzeiger vom Fahrer aktiviert wird.

8. Verfahren gemäß Anspruch 6, **dadurch gekennzeichnet, dass** der Fahrtrichtungsanzeiger spätestens zu Beginn des Vorwärtszuges aktiviert wird.

## Claims

1. Method for displaying a procedure for pulling a vehicle out of a parking space with a travel direction indicator, comprising the following steps:
(a) sensing whether a driving manoeuvre which has been carried out is a manoeuvre for pulling out of a parking space, wherein a driving manoeurvre is sensed as a manoeuvre for pulling out of a parking space if a first driving movement in a first direction is followed by a second driving movement in a second direction opposed to the first direction, and a steering movement is carried out during at least one driving movement,
(b) displaying the manoeuvre for pulling out of a parking space by activating the travel direction indicator, and
(c) keeping the travel direction indicator activated until the manoeuvre for pulling out of a parking space is ended.

2. Method according to Claim 1, **characterized in that** a driving manoeuvre is additionally sensed as a manoeuvre for pulling out of a parking space if an automatic system for pulling out of a parking space is activated.

3. Method according to Claim 1 or 2, **characterized in that** a driving manoeuvre is additionally sensed as a manoeuvre for pulling out of a parking space if objects in front of and/or behind the vehicle are sensed by distance sensors.

4. Method according to Claim 3, **characterized in that** the objects which are sensed by the distance sensors are detected as stationary objects.

5. Method according to Claim 3 or 4, **characterized in that** the driving manoeuvre is sensed as a manoeuvre for pulling out of a parking space if additionally a steering process is detected which causes at least one of the sensed objects to be driven around.

6. Method according to one of Claims 1 to 5, **characterized in that** the first driving movement in the first direction is a reversing driving movement and the second driving movement in the second direction is a forward driving movement.

7. Method according to one of Claims 2 to 6, **characterized in that** the driving manoeuvre is sensed as a manoeuvre for pulling out of a parking space if the travel direction indicator is additionally activated by the driver.

8. Method according to Claim 6, **characterized in that** the travel direction indicator is activated at the latest at the start of the forward driving movement.

## Revendications

1. Procédé d'affichage d'un processus de sortie d'une place de stationnement d'un véhicule depuis un créneau de stationnement avec un indicateur de direction, comprenant les étapes consistant à :
(a) détecter si une manoeuvre de conduite effectuée est une manoeuvre de sortie d'une place de stationnement depuis un créneau de stationnement, une manoeuvre de conduite étant détectée comme étant une manoeuvre de sortie d'une place de stationnement lorsqu'à une première manoeuvre dans une première direction fait suite une seconde manoeuvre dans une seconde direction opposée à la première direction et lorsqu'un mouvement de braquage est effectué lors d'au moins une manoeuvre,
(b) indiquer la manoeuvre de sortie d'une place de stationnement en activant l'indicateur de direction,
(c) maintenir activé l'indicateur de direction jusqu'à ce que la manoeuvre de sortie d'une place de stationnement soit terminée.

2. Procédé selon la revendication 1, **caractérisé en ce qu'**une manoeuvre de conduite est en outre détectée comme étant une manoeuvre de sortie d'une place de stationnement lorsqu'un système automatique de sortie d'une place de stationnement est activé.

3. Procédé selon la revendication 1 ou 2, **caractérisé en ce qu'**une manoeuvre de conduite est en outre détectée comme étant une manoeuvre de sortie d'une place de stationnement lorsque des objets sont détectés par des capteurs de distance à l'avant et/ou à l'arrière du véhicule.

4. Procédé selon la revendication 3, **caractérisé en ce que** les objets détectés par les capteurs de distance sont reconnus comme étant des objets stationnaires.

5. Procédé selon la revendication 3 ou 4, **caractérisé en ce que** la manoeuvre de conduite est détectée comme étant une manoeuvre de sortie d'une place de stationnement lorsqu'il est en outre détecté qu'un processus de braquage conduisant à un contournement d'au moins l'un des objets détectés est effectué.

6. Procédé selon l'une quelconque des revendications 1 à 5, **caractérisé en ce que** la première manoeuvre dans la première direction est une manoeuvre en marche arrière et **en ce que** la seconde manoeuvre dans la seconde direction est une manoeuvre en marche avant.

7. Procédé selon l'une quelconque des revendications 2 à 6, **caractérisé en ce que** la manoeuvre de conduite est détectée comme étant une manoeuvre de sortie d'une place de stationnement lorsque l'indicateur de direction est en outre activé par le conducteur.

8. Procédé selon la revendication 6, **caractérisé en ce que** l'indicateur de direction est activé au plus tard au début de la manoeuvre en marche avant.
